# EUROPEAN PATENT SPECIFICATION

(11) **EP 1 312 849 B1**
(45) Date of publication and mention of the grant of the patent: **30.05.2007**
(21) Application number: 02025869.5
(22) Date of filing: 19.11.2002
(51) Int. Cl.: F16L 39/02, A47L 15/42, D06F 39/08

(54) **Tube for coupling linen washing and dish washing machines to a central water system**
Rohr für die Verbindung von Wasch- und Spülmaschinen zum Wasserversorgungssystem
Tuyau de raccordement de lave-linge et de lave-vaisselle à un système d'adduction d'eau

(30) Priority: 19.11.2001 IT MI20010611 U
(43) Date of publication of application: 21.05.2003
(73) Proprietor: RE-FLEX S.r.l., 21049 Tradate (Varese) (IT)
(72) Inventor: Restelli, Andrea, 21049 Tradate (Varese) (IT)
(74) Representative: Cicogna, Franco

(56) References cited:
- EP-A- 0 474 569
- EP-A- 0 900 965
- FR-A- 2 596 130

## Description

### BACKGROUND OF THE INVENTION

The present invention relates to a tube for coupling linen washing and dish washing machines to a central water system.

Protected tubes for coupling to a central water system linen and dish washing machines are already known.

Said coupling tubes generally comprise an inner tube element, thereon is applied a sheath including means adapted to form, with the inner tube element, a tightly sealed gap.

The outer sheath is usually made of an optically transparent or clear material.

The surface of the inner tube element is so designed that the presence of water in said gap enhances the color thereof, to better show an occurred leakage.

While the above mentioned approach has been found as satisfactory, it, in some cases, does not allow to clearly display a breakage, in particular as water fully fills said gap.

EP 0 474 569 improves this in that a fully filled gap, leads to an optical variation, allowing to clearly see from the outside the presence of water in said gap.

### SUMMARY OF THE INVENTION

Accordingly, the aim of the present invention is to provide a tube for coupling to a central water system linen and dish washing machines, allowing to immediately display the presence of water in a gap defined by an inner tube element and an outer sheath, to allow an operator to immediately intervene.

Within the scope of the above mentioned aim, a main object of the present invention is to provide such a tube which can be coupled to the washing machine and water system by conventional coupling methods, while providing very improved coupling characteristics.

Another object of the present invention is to provide such a coupling tube, which, owing to its specifically designed construction, is very reliable and safe in operation.

Yet another object of the present invention is to provide such a coupling tube which can be easily made starting from easily available elements and materials, and which, moreover, is very competitive from a mere economic standpoint.

The present invention is defined by the features of claim 1.

### BRIEF DESCRIPTION OF THE DRAWINGS

Further characteristics and advantages of the present invention will become more apparent hereinafter from the following detailed disclosure of a tube for coupling to a central water system white goods in general, in particular linen and dish washing machines, which is illustrated, by way of an indicative, but not limitative, example, in the figures of the accompanying drawings, where:

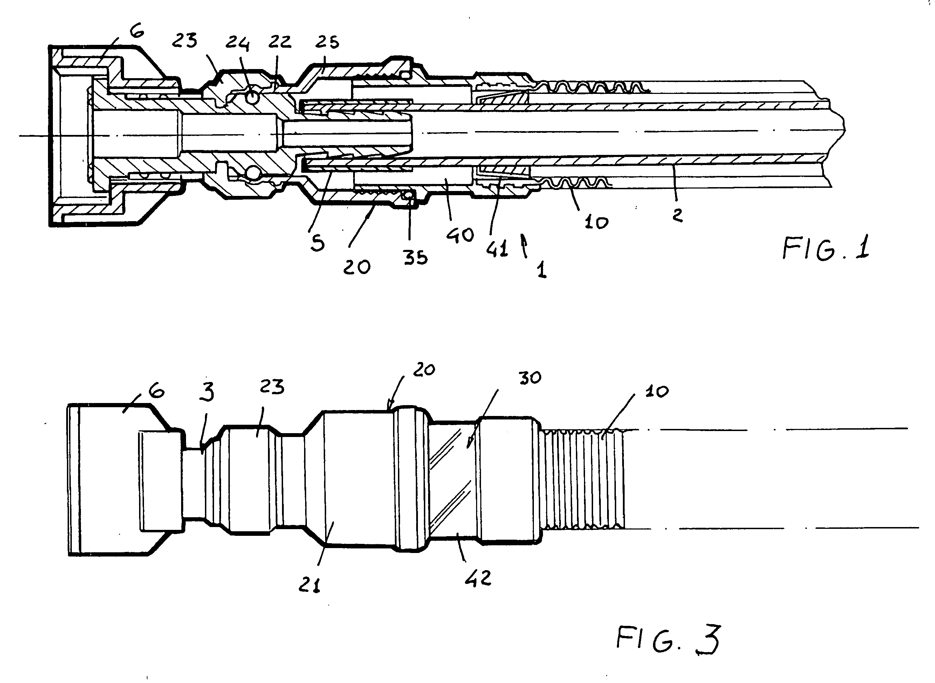

Figure 1 is a longitudinal cross-sectional view illustrating the coupling tube according to the present invention;

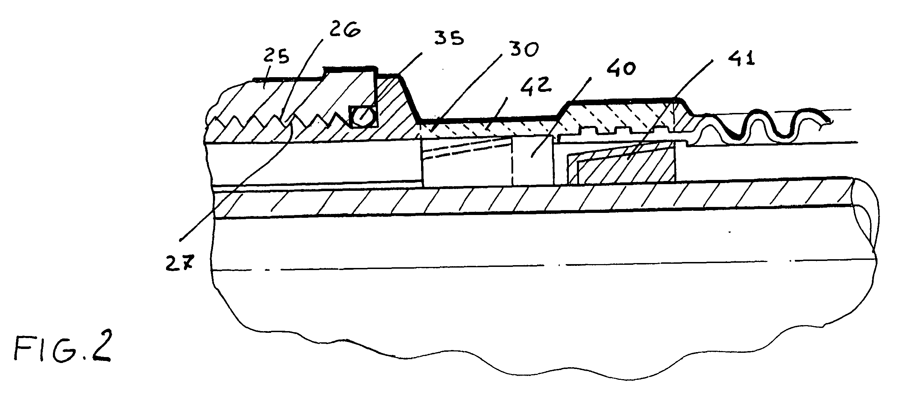

Figure 2 illustrates, on an enlarged scale, a detail of the covering casing and indicating element;
   and
Figure 3 illustrates the end portion of the coupling tube exposed to the view.

### DESCRIPTION OF THE PREFERRED EMBODIMENTS

With reference to the number references of the above mentioned figures, the coupling tube for coupling to a water system white goods in general, and linen and dish washing machines in particular, which has been generally indicated by the reference number 1, comprises an inner tube element 2, which, at its end portions, is coupled to a rubber holder fitting 3 and, in a per se known manner, being provided with an inlet thereon is arranged a tube clamping bush 5, for coupling at the end thereof the inner tube element 2.

At the other end portion thereof, the fitting 3 is coupled, in a per se known manner, to a clamping ring nut 6.

On the outside of the inner tube element 2, is provided an outer tube element 10, or protective sheath, which, in cooperation with the tube element 2, defines a gap which is outward tightly closed.

The main feature of the invention is that, at least at one portion of the tube 1, is provided a covering casing, which has been generally indicated by the reference number 20.

The covering casing 20 comprises a first half-body 21, generally colored, having an end-piece 22 on which is provided an overmolding portion 23 for coupling to the fitting 3.

A sealing O-ring 24 is moreover provided for tightly coupling the fitting and the end piece 22.

In particular the end piece 22, comprises a tapering portion 25 with an inner thread 26 which can be coupled with the male thread 27 of a second half-body 30, which is made of a clear or transparent material and is overmolded at the end portion of the outer protective tube element 10.

The casing 20 which, at its connecting region is provided with a sealing O-ring 35, defines an inner chamber 40, in which an indicating or signalling element 41 is driven.

In particular, said indicating element 41 is driven by a pushing force of the liquid possibly present in the gap 11 because of a failing of the inner tube element.

The signalling or indicating element 41 is constituted by an annular band, which is tightly movable on the inner tube element 2.

Said signalling or indicating element 41, in a regular or normal operation condition, will be arranged at a protected region inside the outer tube element 10 which is advantageously colored and, because of this reason, cannot be seen from outside.

If a liquid leak occurs, as is shown in figure 3, then a pushing force will be generated, tending to drive the indicating element 41, which is advantageously formed with a rectangular trapezium cross section at the visible clear band 42 of the half-body 30, thereby it can be easily seen from outside.

The signalling or indicating element 41 is colored with a red color.

Thus, a leak occurring as the tube fails, will generate a pushing force on the indicating element, which will be driven so as to immediately make the failure visible, with a consequent possibility of performing immediate repairing operations.

In practicing the invention, the used materials, provided that they are compatible to the intended application, and the contingent size and shaped, can be any, depending on requirements.

## Claims

1. A tube (1) for coupling linen and dish washing machine to a central water systems, comprising an inner tube element (21) coupled, at the end portions thereof, to a rubber holder fitting (3) and an outer protective tube (10) defining, in cooperation with said inner tube element (2), a tightly closed gap, said tube including detecting means for allowing to immediately detect a presence of a leakage water in said tightly closed gap, said detecting means comprising, at least at one end portion of said inner tube element (21), a covering casing (20) defining a casing chamber, inside which an indicating element (41) is movable, said indicating element being driven by the pushing force provided by the liquid present in said gap, as said inner tube element fails and leakage water enters said casing chamber, **characterized in that** said covering casing (20) comprises a first and second casing half-bodies (21, 30), tightly coupled to one another, that said first half-body (21) is coupled to said fitting by an overmolded portion (23), that said second half-body (30) is overmolded with respect to the outer tube element (10), that said first half-body (21) is provided with a tapering portion (25) having a female thread (26) for engaging with a male thread (27) defined by said second half-body (30), that said second half-body (30) comprises an optically transparent portion (42) at a position assumed by the indicating element as the inner tube element fails, that said indicating element (41) comprises an annular body which can be tightly driven on the inner tube element, that said annular body is colored in a red color, and that said outer tube element (10) is made of a colored material.

2. A tube, according to claim 1, **characterized in that** said annular body has a rectangular trapezium shaped cross-section.

## Patentansprüche

1. Rohr (1) zum Anschießen von Wasch- und Geschirrspülmaschinen an eine Hauptwasserversorgung, umfassend ein inneres Rohrelement (21), das an seinen Endabschnitten mit einem Gummihalteranschlussstück (3) verbunden ist, und ein äußeres Schutzrohr (10), das im Zusammenwirken mit dem inneren Rohrelement (21) einen dicht verschlossenen Spalt definiert, wobei das Rohr ein Detektionsmittel enthält, um sofort das Vorhandensein von auslaufendem Wasser in dem dicht verschlossenen Spalt detektieren zu können, wobei das Detektionsmittel an wenigstens einem Endabschnitt des inneren Rohrelements (21) ein Abdeckgehäuse (20) umfasst, das eine Gehäusekammer definiert, in deren Inneren ein Anzeigeelement (41) beweglich ist, wobei das Anzeigeelement durch die Drückkraft angetrieben wird, die durch die Flüssigkeit erzeugt wird, die sich in dem Spalt befindet, wenn das innere Rohrelement einen Funktionsausfall hat und auslaufendes Wasser in die Gehäusekammer eintritt, **dadurch gekennzeichnet, dass** das Abdeckgehäuse (20) einen ersten und einen zweiten Gehäusehälftenkörper (21, 30) umfasst, die fest aneinander befestigt sind, dass der erste Hälftenkörper (21) durch einen übergeformten Abschnitt (23) mit dem Anschlussstück verbunden ist, dass der zweite Hälftenkörper (30) relativ zu dem äußeren Rohrelement (10) übergeformt ist, dass der erste Hälftenkörper (21) mit einem sich verjüngenden Abschnitt (25) versehen ist, der ein Innengewinde (26) aufweist, das ein Außengewinde (27) in Eingriff nimmt, das durch den zweiten Hälftenkörper (30) definiert wird, dass der zweite Hälftenkörper (30) einen optisch transparenten Abschnitt (42) an einer Position umfasst, die von dem Anzeigeelement eingenommen wird, wenn das innere Rohrelement einen Funktionsausfall hat, dass das Anzeigeelement (41) einen ringförmigen Körper umfasst, der fest auf das innere Rohrelement bewegt werden kann, dass der ringförmige Körper eine rote Färbung aufweist, und dass das äußere Rohrelement (10) aus einem farbigen Material hergestellt ist.

2. Rohr nach Anspruch 1, **dadurch gekennzeichnet, dass** der ringförmige Körper einen rechteckigen trapezförmigen Querschnitt aufweist.

## Revendications

1. Tube (1) destiné à coupler une machine à laver le linge et la vaisselle à des systèmes d'alimentation en eau centralisés, comprenant un élément de tube interne (21) couplé, au niveau de ses parties d'extrémité, à un raccord de maintien (3) en caoutchouc et un tube protecteur externe (10) définissant, en coopération avec ledit élément de tube interne (21), un espace fermé hermétiquement, ledit tube incluant des moyens détecteurs permettant de détecter immédiatement la présence d'eau de fuite dans ledit espace fermé hermétiquement, lesdits moyens détecteurs comprenant, au moins au niveau d'une partie d'extrémité dudit élément de tube interne (21), un boîtier de recouvrement (20) définissant une chambre de logement, à l'intérieur de laquelle peut se déplacer un élément indicateur (41), lesdits éléments indicateurs étant entraînés sous l'effet de la force de poussée exercée par le liquide présent dans ledit espace, lorsque ledit élément de tube interne fait défaut et que de l'eau de fuite pénètre dans ladite chambre de logement, **caractérisé en ce que** ledit boîtier de recouvrement (20) comprend des premier et second demi-corps de boîtier (21, 30), couplés de manière hermétique l'un à l'autre, **en ce que** ledit premier demi-corps (21) est couplé audit raccord par une partie surmoulée (23), **en ce que** ledit second demi-corps (30) est surmoulé par rapport à l'élément de tube externe (10), **en ce que** ledit premier demi-corps (21) est doté d'une partie conique (25) ayant un filetage femelle (26) destiné à s'engager avec un filetage mâle (27) défini par ledit second demi-corps (30), **en ce que** ledit second demi-corps (30) comprend une partie optiquement transparente (42) en une position adoptée par l'élément indicateur lorsque ledit élément de tube interne fait défaut, **en ce que** ledit élément indicateur (41) comprend un corps annulaire qui peut être entraîné de manière hermétique sur l'élément de tube interne, **en ce que** ledit corps annulaire est coloré en rouge, et **en ce que** ledit élément de tube externe (10) est constitué d'un matériau coloré.

2. Tube selon la revendication 1, **caractérisé en ce que** ledit corps annulaire a une section en coupe transversale en forme de trapèze rectangulaire.
